# EUROPEAN PATENT APPLICATION

(11) **EP 2 485 121 A2**
(43) Date of publication of application: **08.08.2012**
(21) Application number: 12153397.0
(22) Date of filing: 31.01.2012
(51) Int. Cl.: G06F 3/02

(54) **Alphanumeric keypad arrangement for handheld devices**

(30) Priority: 02.02.2011 US 201113019356
(71) Applicant: Hand Held Products, Inc., Skaneateles Falls, New York 13153 (US)
(72) Inventor: Kawalkar, Amit Nishikant, Morristown, NJ New Jersey 07962-2245 (US)
(74) Representative: Buckley, Guy Julian

(57) **Abstract**

A mobile device including: a display for displaying information; a processor for controlling software and firmware operation; a keypad for entering data to the processor comprising an array of alpha keys for alpha data entry and an array of numeric keys for numeric data entry, wherein entry of alpha data does not require use of numeric keys and numeric data does not require use of alpha keys, the keypad comprising: a first cell of alpha keys to be actuated by the left thumb of an operator, the first cell of alpha keys comprised of more than one essentially linear row of alpha keys; a second cell of alpha keys to be actuated by the right thumb of an operator, the second cell of alpha keys comprised of more than one essentially linear row of alpha keys.

## Description

### FIELD OF THE INVENTION

The present invention relates to hand held mobile devices, and more particularly to a hand held mobile device having an ergonomic, thumb and wrist friendly full alphanumeric keypad arrangement for handheld devices.

### BACKGROUND

Mobile devices (also referred to as smart phones, handheld devices, handheld computers, PDAs, PDTs, etc.) are widely used worldwide, and may be described as pocket-sized computing devices, typically having a display screen with touch input or a miniature keypad. In some mobile devices the input and output are combined into a touch-screen interface. Mobile devices are popular because they provide the assistance and convenience of a conventional computer (laptop, notebook or otherwise) in environments where carrying one would not be practical. Enterprise digital assistants further extend the available functionality of mobile devices.

An Enterprise digital assistant (EDA) is a handheld computer adapted for usage with SME (Small to Medium Enterprise) and Enterprise business Application software|Applications as a data capture mobile device. Such data capture applications include indicia readers, biometrics, magnetic stripe, smart card and RFID data capture technologies used within communication networks such as WLANs (Wireless Local Area Networks), Bluetooth, Wide area network|WAN/LAN/Personal Area Network|PAN voice and data communications, VOIP and GPRS Edge Communications.

Handheld mobile devices are smaller in size as compared to a small laptop and still offer full alphanumeric keypad. Such full keypads are not only provided as hard buttons but also as a touch screen interface. The small size of the keys and the linear layout of the keypad and width of the these devices are not ergonomically friendly to the physiological characteristics of the thumbs to operate with. Linear full alphanumeric keypads (such as QWERTY) were originally designed for typing with all 10 fingers, where thumb is used for just tapping the SPACE bar. Linear keypad layouts are not designed for thumbs, which have limited flexibility and are comparatively rigid than the other fingers. Fatigue is therefore quickly induced into when using linear alphanumeric keypads. In addition, people using small hand held devices and extensively typing using conventional linear alphanumeric keypad are suffering from Repetitive Strain Injury, sometimes termed "Blackberry Thumb".

An alternate, ergonomic and "Thumb Friendly" full alphanumeric keypad design is desired to make typing pain free and comfortable. Efforts regarding such systems have led to continuing developments to improve their versatility, practicality and efficiency.

### BRIEF DESCRIPTION OF THE DRAWINGS

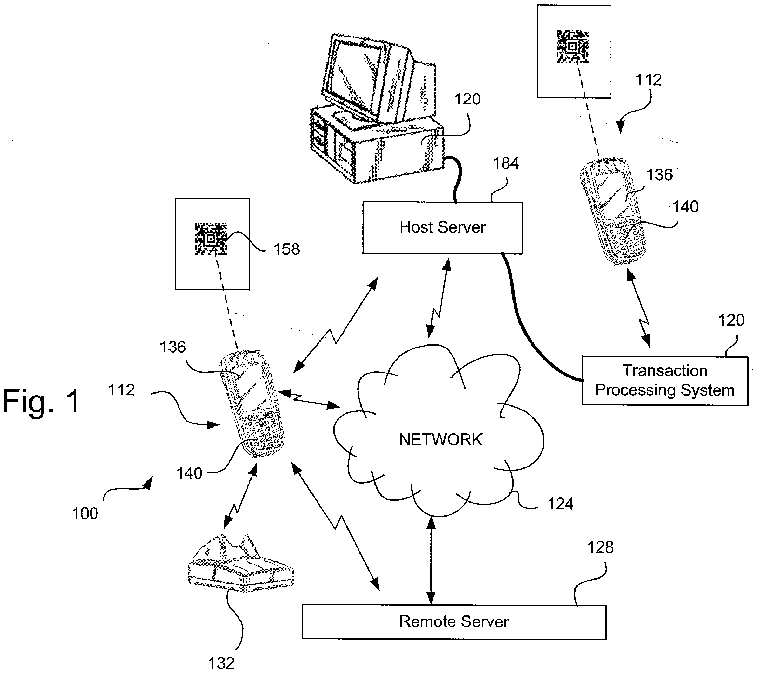

FIG. 1 is a block diagram of an exemplary mobile device system.

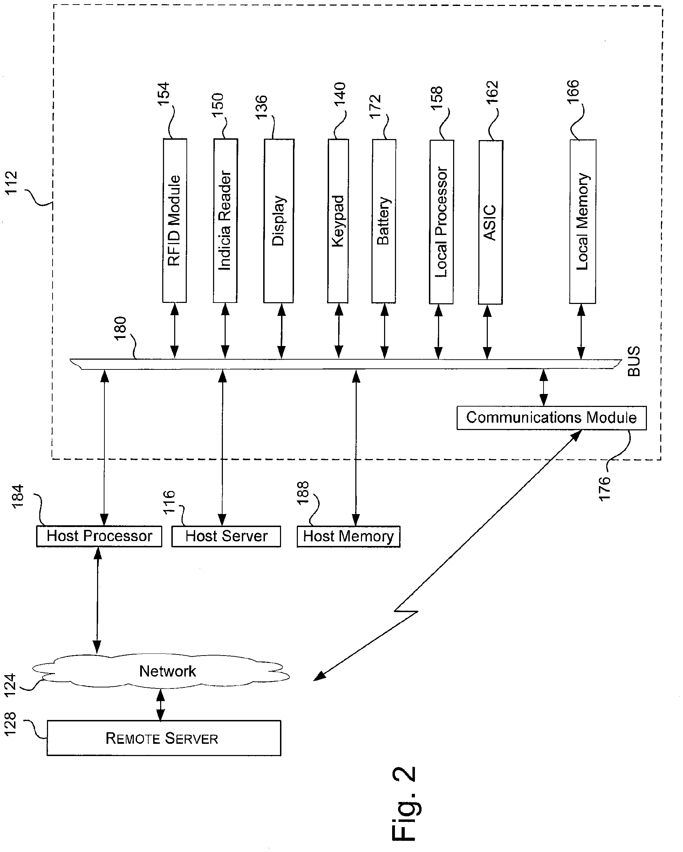

FIG. 2 is a block schematic diagram of an exemplary mobile device.

FIG. 3 is a front view of an exemplary mobile device.

FIG. 4 is a front view of an exemplary mobile device keypad.

FIG. 5 is an illustration of a hand.

### DETAILED DESCRIPTION

Reference will now be made to exemplary embodiments which are illustrated in the accompanying drawings. Other embodiments may be in various forms and the exemplary embodiments should not be construed as limited to the embodiments set forth herein. Rather, these representative embodiments are described in detail so that this disclosure will be thorough and complete, and will fully convey the scope, structure, operation, functionality, and potential applicability to those skilled in the art. Wherever possible, the same reference numbers will be used throughout the drawings to refer to the same or like parts.

The term "touch," as used herein, may refer to a touch of an object, such as a body part (e.g., a finger) or a pointing device (e.g., a soft stylus, pen, etc.). A touch may be deemed to have occurred if a sensor detects a touch, by virtue of the proximity of the deformable object to the sensor, even if physical contact has not occurred. As used herein, a "primary touch" may be a touch area registered by sensors with a particular level of sensitivity on a touch panel and a "near touch" or "near-touch area" may be a touch area in the vicinity of the primary touch registered by sensors with a different level of sensitivity than used for the primary touch. The term "touch panel," as used herein, may refer not only to a touch-sensitive panel, but a panel that may signal a touch when the finger or the object is close to the screen (e.g., a capacitive screen, a near field screen).

Fig.s 1 and 2 illustrate an exemplary mobile device system 100 configuration, wherein a plurality of mobile devices 112 are being operated or utilized which may be in communication (wired or wireless) with other mobile devices 112, a local host/sever 116, point of transaction processing system 120 such as a cash register, customer station or employee station, a network 124, a remote/web server 128, a base unit 132 or other systems and devices having communication capabilities. The systems illustrated in Fig.s 1 and 2 may be in communication directly with each other or indirectly through other devices, networks, servers or systems.

The mobile devices may be operated or utilized in a remote location, such as in an establishment, a store point of transaction (POT), a warehouse, a delivery truck, in the field, etc.. Distances for communications from the mobile device may be short (a few meters as in television remote control) or very long (thousands or even millions of kilometers for radio communications). Wireless communication may involve radio frequency communication and may involve point-to-point communication, point-to-multipoint communication, broadcasting, cellular networks and other wireless networks. This may involve: cordless telephony such as DECT (Digital Enhanced Cordless Telecommunications); Cellular systems such as OG, 1 G, 2G, 3G or 4G; Short-range point-to-point communication such as IrDA or RFID (Radio Frequency Identification), Wireless USB, DSRC (Dedicated Short Range Communications); Wireless sensor networks such as ZigBee; Personal area networks such as Bluetooth or Ultra-wideband (UWB from WiMedia Alliance); Wireless computer networks such as Wireless Local Area Networks (WLAN), IEEE 802.11 branded as WiFi or HIPERLAN; or Wireless Metropolitan Area Networks (WMAN) and Broadband Fixed Access (BWA) such as LMDS, WiMAX or HIPERMAN.

Mobile devices may be utilized as part of Mobile Enterprise (Mobile ERP), which is a collection of Online Interactive Business Applications such as SMS and E-mail. Business modules, functions and operations executed using Mobile Enterprise include Collaboration, Document management system (DMS), Customer relationship management (CRM), Point of sale (POS), Human resource management systems (HRMS), Accounting software, Enterprise resource planning (ERP), including sales order, sourcing, tender, request for Quotation, purchase order, shipment, receiving, warehousing, inventory control, delivery order, invoicing, customer service order, production monitoring and control, work order, as well as basic utilities such as corporate calendar, corporate address book, corporate bulletin board, notes and internal messaging.

Mobile Enterprise (Mobile ERP) devices require manual data entry for various applications. The manual data entry may be labor intensive and requires the user to be very precise when entering the data.

The mobile device may have a data capture system, such as an indicia reader 150 or RFID module 154 for capturing machine readable data. A human operator may aim a hand-held mobile device having an indicia reader at a target containing an information bearing indicia (IBI) 158 or dataform, text, or other element and actuate a trigger on the mobile device. An IBI or dataform may be an originally machine generated symbology that is also machine readable, such as a 1-D barcode, a 2-D barcode, a 1-D stacked barcode, a logo, glyphs, color-codes, etc..

Other exemplary subsystems or components provided within the housing of a mobile device include a local processor 158, an ASIC 162, local memory 166, a battery 172, a communications module 176 which may communicate via one or more bus 180, data lines or other signal or data communication form. The mobile device may communicate to a local server 116, host processor 184, host memory 188, network 124 or remote server 128.

An exemplary host or local processor may be utilized to perform a number of functional operations, which may involve the performance of a number of related steps, the particulars of which may be determined by or based upon certain configuration settings stored in memory. An exemplary function of a processor may be to decode machine readable information bearing indicia provided within a target or captured image. One dimensional symbologies may include very large to ultra-small, Code 128, Interleaved 2 of 5, Codabar, Code 93, Code 11, Code 39, UPC, EAN, MSI, or other 1D symbologies. Stacked 1D symbologies may include PDF, Code 16K, Code 49, or other stacked 1D symbologies. 2D symbologies may include Aztec, Datamatrix, Maxicode, QR-code, or other 2D symbologies. Decoding is a term used to describe the interpretation of an information bearing indicia captured in an image which has data or information encoded therein.

Mobile devices are commonly used for text messaging. Text messaging or texting refers to the exchange of brief written messages between fixed-line mobile device or mobile device and fixed or portable devices over a network. The term refers to messages sent using the Short Message Service (SMS) and messages containing image, video, and sound content (known as Multimedia Message Services or MMS messages). Multimedia Message Services is different from SMS (Short Message Service) because it include photos, video etc. The sender of a text message is known as a texter, while the service itself has different colloquialisms depending on the region, it may simply be referred to as a text.

Text messages may be used to interact with automated systems, such as for ordering products and services for mobile devices, or participating in contests. Advertisers and service providers use texts to notify mobile device users about promotions, payment due dates and other notifications.

Text Messaging by mobile devices or mobile devices may include all 26 letters of the alphabet and 10 numerals, i.e. alpha-numeric messages or text to be sent by texter or received by the textee.

MMS may be a store-and-forward method of transmitting graphics, video clips, sound files and short text messages over wireless networks using the WAP protocol. Carriers deploy special servers, dubbed MMS Centers (MMSCs) to implement the offerings on their systems. MMS also supports e-mail addressing providing that a device may send e-mails directly to an e-mail address. MMS may be used for communication between scanners and scanning mobile devices such as point of transaction (POT) scanners, mobile devices, PDTs, PDAs, etc..

MMS message refers to a multimedia message, which contains text, audio, video various other multimedia content sent via mobile devices in a mobile device network.

MMS message extends the capacity of SMS sending, which may be limited only to text messages up to 160 or 70 characters in length. Because of their extended content, MMS messages are sent differently from SMS messages. The sending device first encodes the message, then it forwards to a MMS Center (MMSC). The MMSC informs a recipient device of the message. The recipient device downloads the content from the MMSC and displays the content. Some mobile devices are unable to display MMS content, because their screens may only show texts. If the recipient device may be incapable of showing the message, the MMSC sends a text message including the URL (the address of web pages) where the MMS message may be opened and viewed.

A MMS message may be compatible to be sent from different media. Besides GSM mobile devices, MMS services enable specialized MMS Gateways to transfer MMS. Enterprises use automated MMS sending by installing an MMS Gateway software into their systems. Such software may be suitable for sending both SMS and MMS contents.

MMS Gateways set up a GPRS link and download the MMS messages from the MMSC. As the download occurs a unique message ID may be assigned to the message. It may be important to know that incoming MMS messages are made up from individual files, such as JPG and GIF pictures, WAV files and TXT content. They are the attachments of the messages with ID and saved to the same download directory as the messages. Entering the inbox the message ID with the attachment list are displayed and may be found in the download directory.

MMS messages may also be received by subscribing for MMS services. The subscriber sends a code to a preset mobile device number and receives the MMS with the content. MMS messages may contain ringtones, wallpapers, pictures, photos, videos or music. After saving them to the GSM device, the usage of the MMS content becomes possible. Visuals may be set as background pictures and files that with videos and music may be used as ringtones.

MMS messages may offer unlimited ways of communication, self expression and information mediation. MMS messages are useful tools for commerce and business as they demonstrate the content more explicitly and leaves no gaps in content. Visuals and audios help to underline the meaning of a simple text message, which would otherwise arouse no interest.

Wireless Application Protocol (WAP) may be an open international standard. A WAP browser may be a commonly used web browser for small mobile devices.

MMS, however, may be not the same as e-mail. MMS is based on the concept of multimedia messaging. The presentation of the message may be coded into the presentation file so that the images, sounds and text are displayed in a predetermined order as one singular message. MMS does not support attachments as e-mail does. MMS text messaging may be utilized on a scanning device such as a barcode scanner at a POT.

MMS is a descendant of SMS (Short Messaging Service). MMS extends text messaging to include longer text, graphics, photos, audio clips, video clips, or any combination.

Short Message Service (SMS) is the text communication service component of mobile device, web or mobile communication systems, using standardized communications protocols that allow the exchange of short text messages between fixed line or mobile device devices, usually between cell mobile devices, or from a PC or handheld to a cell mobile device. The term SMS is used as a synonym for all types of short text messaging as well as the user activity itself in many parts of the world. The "short" part refers to the maximum size of the text messages, such as 160 characters (letters, numbers or symbols in the Latin alphabet).

Mobile devices are constantly sending and receiving information, talking to a cell mobile device tower over a pathway called a control channel. The reason being so that the cell mobile device system knows which cell a mobile device is in so that a mobile device may change cells as it is moved around. Every so often, the mobile device and a cell tower will exchange a packet of data that confirms operable communication conditions.

The mobile device also uses a control channel for call setup. When someone tries to call a mobile device, the cell tower sends the mobile device a message over the control channel that tells the mobile device to play its ringtone. The tower also gives the mobile device a pair of voice channel frequencies to use for the call.

The control channel also provides the pathway for SMS messages. When a SMS message is sent, the message flows through the SMSC, then to the tower, and the tower sends the message to the mobile device as a little packet of data on the control channel. In the same way, the mobile device sends it to the tower on the control channel and it goes from the tower to the SMSC and from there to its destination.

MMS may be used to send photos and videos from camera mobile devices to other MMS mobile devices or email accounts MMS platforms may support SMIL, which allows various parts of an MMS message to be arranged into a small multimedia "slideshow" to be viewed on another SMIL-capable MMS mobile device.

MMS messages are delivered in a different way from SMS messages. The first step is for the sending device to encode the multimedia content in a fashion similar to sending a MIME e-mail (MIME content formats are defined in the MMS Message Encapsulation specification). The message is then forwarded to the carrier's MMS store and forward server, known as the MMSC. If the receiver is on another carrier, the relay forwards the message to the recipient's carrier using the Internet.

Once the MMSC has received a message, it first determines whether the receiver's handset is "MMS capable", that is it supports the standards for receiving MMS. If so, the content is extracted and sent to a temporary storage server with an HTTP front-end. An SMS "control message" containing the URL of the content is then sent to the recipient's handset to trigger the receiver's WAP browser to open and receive the content from the embedded URL. Several other messages are exchanged to indicate status of the delivery attempt. Before delivering content, some MMSCs also include a conversion service that will attempt to modify the multimedia content into a format suitable for the receiver. This is known as "content adaptation".

If the receiver's handset is not MMS capable, the message is usually delivered to a web based service from where the content may be viewed from a normal internet browser. The URL for the content is usually sent to the receiver's mobile device in a normal text message. This behavior is usually known as the "legacy experience" since content may still be received by a mobile device number, even if the mobile device itself does not support MMS.

The method for determining whether a handset is MMS capable is not specified by the standards. A database is usually maintained by the operator, and in it each mobile device number is marked as being associated with a legacy handset or not. It may be a bit hit and miss since customers may change their handset at will and this database is not usually updated dynamically.

E-mail and web-based gateways to the MMS (and SMS) system may be established. On the reception side, the content servers may typically receive service requests both from WAP and normal HTTP browsers, so delivery via the web is simple. For sending from external sources to handsets, most carriers allow MIME encoded message to be sent to the receiver's mobile device number with a special domain. An example of this would be PTN@messaging.carrier.com, where PTN is the public telemobile or mobile device number. Typically the special domain name is carrier specific.

With MMS, handset configuration may cause problems sending and receiving MMS messages. Also, content multimedia content created by one brand of MMS mobile device may not be entirely compatible with the capabilities of the recipient's MMS mobile device. In the MMS architecture, the recipient MMSC is responsible for providing content adaptation (e.g., image resizing, audio codec transcoding, etc.), if this feature is enabled by the mobile network operator. When content adaptation is supported by a network operator, its MMS subscribers enjoy compatibility with a larger network of MMS users than would otherwise be available.

MMS requires a number of handset parameters to be set. Poor handset configuration is often blamed as the first point of failure for many users. Service settings are sometimes preconfigured on the handset, but mobile operators are now looking at new device management technologies as a means of delivering the necessary settings for data services (MMS, WAP, etc.) via over-the-air programming (OTA).

Few mobile network operators offer direct connectivity to their MMSCs for content providers. This has resulted in many content providers using WAP push as the only method available to deliver 'rich content' to mobile handsets. WAP push enables 'rich content' to be delivered to a handset by specifying the URL (via binary SMS) of a pre-compiled MMS, hosted on a content provider's web server. Although the standard does not specify a maximum size for a message, 300 kB is the current recommended size used by networks due to some limitations on the WAP gateway side

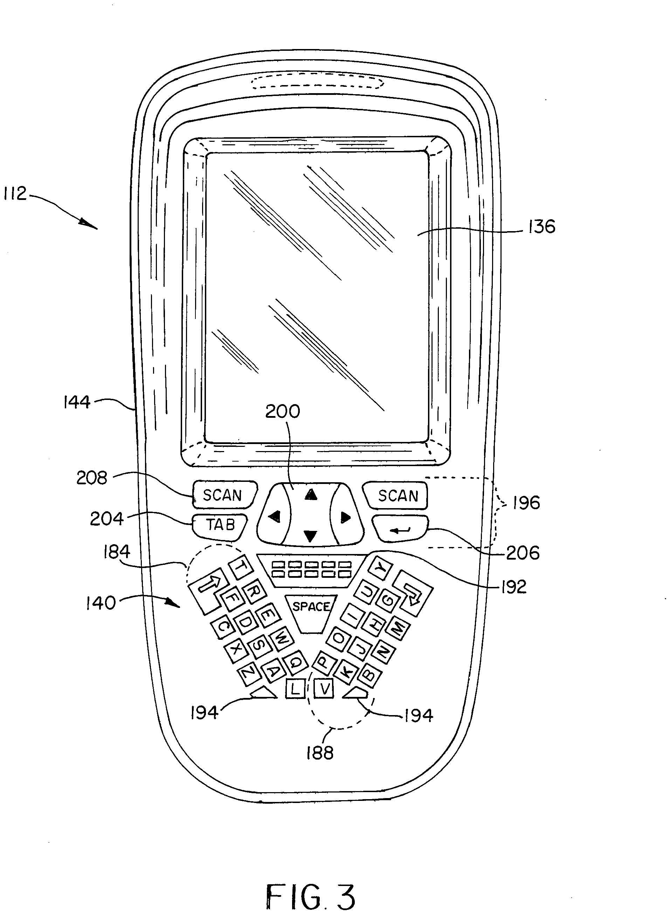

Fig. 3 illustrates an exemplary mobile device 112 having a display 136 and a keyboard or keypad 140 contained within a housing 144 designed, contoured or adapted for hand held operation. What is meant by hand held operation is that the mobile device may be easily grasped and held by a user. The mobile device may be a light-weight, truly portable device with a housing that is shaped so as to fit comfortably into a human hand and may be easily held and carried about without tiring the user.

Display 136 may include a device that may display signals generated by electronic device 100 as text or images on a screen (e.g., a liquid crystal display (LCD), cathode ray tube (CRT) display, organic light-emitting diode (OLED) display, surface-conduction eletro-emitter display (SED), plasma display, field emission display (FED), bistable display, etc.). In certain implementations, display may provide a high-resolution, active-matrix presentation suitable for the wide variety of applications and features associated with typical mobile devices.

Display 136 may provide visual information to the user and serve-in conjunction with keypad 140 as a user interface to detect user input. For example, display 136 may provide information and menu controls regarding incoming or outgoing telephone calls and/or incoming or outgoing electronic mail (e-mail), instant messages, short message service (SMS) messages, etc. Display 136 may further display information and controls regarding various applications executed by electronic device 100, such as a web browser, a phone book/contact list program, a calendar, an organizer application, image manipulation applications, navigation/mapping applications, an MP3 player, as well as other applications. For example, display 110 may present information and images associated with application menus that may be selected using multiple types of input commands. Display 110 may also display images associated with a camera, including pictures or videos taken by the camera and/or received by electronic device 100. Display 110 may also display video games being played by a user, downloaded content (e.g., news, images, or other information), etc.

Exemplary keypad 140 may be comprised of multiple function data entry keys that may be capable of inputting at least two different types of alphanumeric information selected from the group consisting of letters, numbers, punctuation symbols, functions, etc.. An exemplary hybrid keypad 140 layout and design has separate arrays or cells of alpha keys 184, 188 and numeric keys 192 to provide an intuitive interface for mobile device users to enter Mobile ERP data and interact with applications.

Other keys 194, which may be considered part of the keypad and may be comprised of keys used for typing keys other than alpha keys, such as a space key, a shift key, a period, an escape key, etc..

Above the numeric keys section 192 may be a command key section 196 comprised of single-purpose keys whose depression activates a function which does not involve the direct input of alphanumeric data, such as scrolling keys 200, tab keys 204, enter or return function keys 206, keys 208 to initiate or activate image capture, data capture, scanning or reading of an IBI, etc..

Exemplary alpha input keys may have several functions or multifunction capability. For example, a key may input the letter Q or an explanation point (!). The letter Q may be entered by the key when the keypad is in its default mode. The explanation point may be entered by pressing a shift key to put the keypad into an alternate key mode.

Exemplary numeric input keys may have multifunction capability by having the ability to activate functions which do not involve the direct input of alphanumeric data. For example, a key may input the number 1 or perform a function F1. The number 1 may be entered by the key when the keypad is in its default mode. The function F1 may be entered by pressing shift key and putting the keypad into an alternate key mode. The function F1 may cause the mobile device to perform a number of functions, such as enter the device into a computation mode, communication mode, imaging mode, scanning mode, etc..

In an example keypad 140 may be a touch panel that may accept touches from a user that may be converted to signals used by device 144. In one implementation, device 144 may include a single type touch panel. In another implementation, the touch panel may include two or more touch panel technologies in a single touch panel or in multiple touch panels. Touch coordinates on the touch panel may be communicated to touch panel controller.

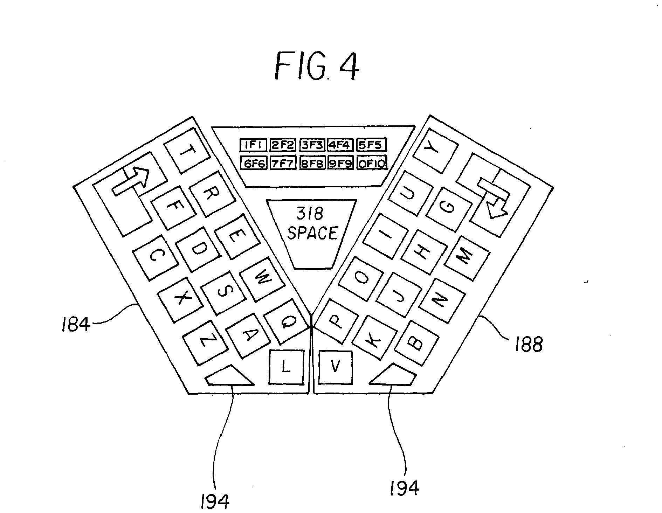

Figs. 3-4 illustrate an exemplary keypad 140 may be comprised of multiple function data entry keys that may be capable of inputting at least two different types of alphanumeric information selected from the group consisting of letters, numbers, punctuation symbols, functions, etc.. An exemplary hybrid keypad 140 layout and design has two separate arrays or cells of alpha keys 184, 188 and numeric keys 192 to provide an intuitive interface for mobile device users to enter Mobile ERP data and interact with applications. One half of the keypad may be a key cell 184 disposed in a comfortable operable region of a user's left hand thumb. The other half of keypad may be a key cell 188 disposed in a comfortable operable region of a user's right hand thumb. Each cell may be lit or illuminated separately or together.

Exemplary hybrid keypad 140 may be comprised of alpha key arrays or cells 184, 188 of three essentially rows of keys with the letters, symbols or punctuations of the English alphabet and other keys to perform certain functions other than typing, such as backspacing or returning.

In an exemplary embodiment, the angle represented between the essentially linear rows of keys is on the order of 60 degrees.

Keypad 140 may include keys for text input and may take the form of a keypad that may facilitate the entry of alphanumeric text. In one example, each key may be a pushbutton. A user may utilize keypad 140 for entering information, such as text or a phone number, or activating a special function. A SPACE key 318 may be at the center of the keypad and equidistant from both left and right thumb.

An exemplary keypad layout of Figs. 3-5 may be arrange alpha keys 184, 188 in a symmetric layout and may be applicable for the handheld devices that require a full character keypad. The exemplary individual character keys illustrated , however, may be arranged differently than those shown. Exemplary cells 184, 188 themselves, however, are accessible and visible, thereby requiring less time for a user to respond.

The keys in exemplary cells 184, 188 may be arranged in multiple rows (in this example essentially three) of alpha keys which lie essentially in a linear line.

Exemplary hybrid keypad comprises an alpha keypad layout for familiar alpha data entry and separate dedicated numeric keys for numeric data entry without the requirement to shift the keys or device. Exemplary mobile device and/or typewriting commands are well known to those skilled in the art. There may be a large number of different keypad layouts used for different languages and generally may be divided into three main families according to where the keys are placed on the keypad.

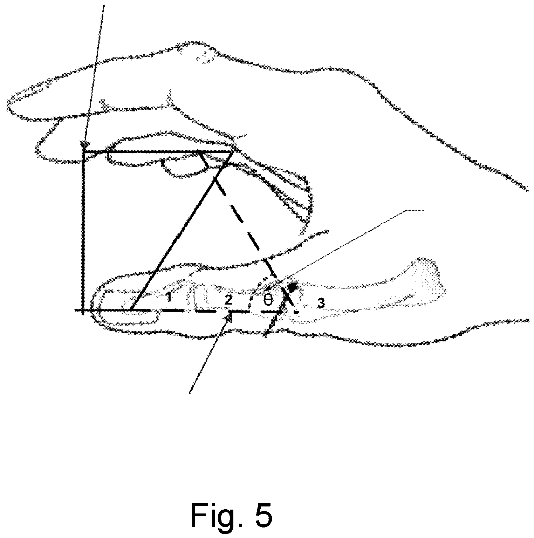

Fig. 5 illustrates an average human thumb physiology, wherein the outlined area 310 illustrates where the thumb may reach and move with lesser vertical and lateral bends in the bone members 314. This area may be more comfortable to operate than the linear area traversed by thumb in existing linear keypads.

Human thumbs by design are most comfortable when they are operated in the shape 310. The most comfortable operable movement area of a thumb is posture illustrated in Fig. 5. The vertical bend angle ⊝ between bones 1 and 2 may be as small as 5 degrees and lateral bend angle between bones 2 and 3 may range between 0 and 45 degrees. The exemplary keypad arrangement illustrated herein may require bones 1 and 2 to bend a maximum of about 15 degrees whereas linear QWERTY keypad arrangements may require them to bend as much as 90 degrees.

Exemplary keys are inside the thumb's comfortable operating area and the layout does not require extreme thumb bends as encountered in the linear thumb operated layouts. Hence reduces muscular strain put on thumb due to prolonged use. This ergonomic placement of the keys reduces required bending angles between thumb's bone members. Hence the effort required to move the thumb across the keypad becomes lesser than that involved in operating linear keypad. Since the movement of bones and muscles are limited only within comfortable operating area, fatigue induced may be lesser than that involved in operating linear keypads.

What is describe herein is an exemplary mobile device comprising:
a display for displaying information; a processor for controlling software and firmware operation; a keypad for entering data to the processor comprising an array of alpha keys for alpha data entry and an array of numeric keys for numeric data entry, wherein entry of alpha data does not require use of numeric keys and numeric data does not require use of alpha keys, the keypad comprising: a first cell of alpha keys to be actuated by the left thumb of an operator, the first cell of alpha keys comprised of more than one essentially linear row of alpha keys; a second cell of alpha keys to be actuated by the right thumb of an operator, the second cell of alpha keys comprised of more than one essentially linear row of alpha keys; wherein a first cell of alpha keys and the second cell of alpha keys are arranged angularly to each other, wherein the angle between the more than one essentially linear row of the first cell of alpha keys and the more than one essentially linear row of the second cell of alpha keys is on the order of 60 degrees and, a housing encompassing the communication system, display, image processor and keypad configured to facilitate an operator holding the mobile device in two hands and keypad data entry with the both thumbs.

A mobile device comprising: a display for displaying information; a processor for controlling software and firmware operation; a keypad for entering data to the processor comprising an array of alpha keys for alpha data entry and an array of numeric keys for numeric data entry, wherein entry of alpha data does not require use of numeric keys and numeric data does not require use of alpha keys, the keypad comprising: a first cell of alpha keys to be actuated by the left thumb of an operator, the first cell of alpha keys comprised of more than one essentially linear row of alpha keys; a second cell of alpha keys to be actuated by the right thumb of an operator, the second cell of alpha keys comprised of more than one essentially linear row of alpha keys; wherein the first cell of more than one essentially linear row of the first cell of alpha keys and the second cell of more than one essentially linear row of alpha keys are arranged angularly to each other and, a housing encompassing the communication system, display, image processor and keypad configured to facilitate an operator holding the mobile device in two hands and keypad data entry with the both thumbs.

In view of the wide variety of exemplary embodiments to which the principles of the present invention can be applied, it should be understood that the illustrated exemplary embodiments are exemplary only, and should not be taken as limiting the scope of the present invention. For example, the steps of the flow diagrams may be taken in sequences other than those described, and more, fewer or other elements may be used in the block diagrams. Also, unless applicants have expressly disavowed any subject matter within this application, no particular exemplary embodiment or subject matter is considered to be disavowed herein.

## Claims

1. A mobile device comprising:
a display for displaying information;
a processor for controlling software and firmware operation;
a keypad for entering data to the processor comprising an array of alpha keys for alpha data entry and an array of numeric keys for numeric data entry, wherein entry of alpha data does not require use of numeric keys and numeric data does not require use of alpha keys, the keypad comprising:
a first cell of alpha keys to be actuated by the left thumb of an operator, the first cell of alpha keys comprised of more than one essentially linear row of alpha keys;
a second cell of alpha keys to be actuated by the right thumb of an operator, the second cell of alpha keys comprised of more than one essentially linear row of alpha keys;
wherein a first cell of alpha keys and the second cell of alpha keys are arranged angularly to each other, wherein the angle between the more than one essentially linear row of the first cell of alpha keys and the more than one essentially linear row of the second cell of alpha keys is on the order of 60 degrees and,
a housing encompassing the communication system, display, image processor and keypad configured to facilitate an operator holding the mobile device in two hands and keypad data entry with the both thumbs.

2. A mobile device in accordance with claim 1, wherein the numeric keys and/or the alpha keys are multi-functional wherein they may be utilized for data entry other than alpha or numeric data.

3. A mobile device in accordance with claim 1, further comprising an indicia reader for reading information bearing indicia and a button for activating indicia reading.

4. A mobile device in accordance with claim 1, further comprising a data capture system and a button for activating data capture.

5. A mobile device in accordance with claim 1, wherein the mobile device is configured to send text messaging communications.

6. A mobile device comprising:
a display for displaying information;
a processor for controlling software and firmware operation;
a keypad for entering data to the processor comprising an array of alpha keys for alpha data entry and an array of numeric keys for numeric data entry, wherein entry of alpha data does not require use of numeric keys and numeric data does not require use of alpha keys, the keypad comprising:
a first cell of alpha keys to be actuated by the left thumb of an operator, the first cell of alpha keys comprised of more than one essentially linear row of alpha keys;
a second cell of alpha keys to be actuated by the right thumb of an operator, the second cell of alpha keys comprised of more than one essentially linear row of alpha keys;
wherein the first cell of more than one essentially linear row of the first cell of alpha keys and the second cell of more than one essentially linear row of alpha keys are arranged angularly to each other and,
a housing encompassing the communication system, display, image processor and keypad configured to facilitate an operator holding the mobile device in two hands and keypad data entry with the both thumbs.

7. A mobile device in accordance with claim 6, wherein the numeric keys and/or the alpha keys are multi-functional wherein they may be utilized for data entry other than alpha or numeric data.

8. A mobile device in accordance with claim 6, further comprising an indicia reader for reading information bearing indicia and a button for activating indicia reading.

9. A mobile device in accordance with claim 6, further comprising a data capture system and a button for activating data capture.

10. A mobile device in accordance with claim 6, wherein the mobile device is configured to send text messaging communications.
